# EUROPEAN PATENT APPLICATION

(11) **EP 3 309 014 A1**
(43) Date of publication of application: **18.04.2018**
(21) Application number: 16425097.9
(22) Date of filing: 13.10.2016
(51) Int. Cl.: B60R 7/06

(54) **GLOVE COMPARTMENT WITH IMPROVED CLOSING DOOR**

(71) Applicant: FCA Italy S.p.A., 10135 Torino (IT)
(72) Inventor: Francavilla, Valentina, 10135 Torino (IT); Bertolo, Andrea, 10135 Torino (IT)
(74) Representative: Mola, Edoardo

(57) **Abstract**

A glove compartment (1) for a dashboard of a motor vehicle comprises a structure (2) defining a space (3) to house items and a movable door (4) to open or close the space (3); the door (4) defining a recess (5) configured to house items and be accessible by a user even while the door (4) is closed.

## Description

The present invention relates to a glove compartment, according to a non-limiting example a compartment of a vehicle dashboard, in front of a passenger seat.

A glove compartment is usually located in the cabin of a vehicle and houses for example travel accessories for the driver and/or for a passenger, such as gloves, glasses, or small size baggage such as handbags, or personal electronic devices such as tablets, cell phones or the like.

The need is felt, in order to increase the comfort of the driver and/or passenger, to obtain a versatile and useful glove compartment so that, at the same time, the search of the items stored in the compartment and the accessibility to the same is easy for the user.

The object of the present invention is to provide for the requirements indicated above in a simple and inexpensive way.

According to the present invention a glove compartment is obtained according to claim 1.

For a better understanding of the present invention a preferred embodiment it is now described, purely by way of non-limiting example, with reference to the accompanying drawings, wherein:
- Figure 1 is an exploded and schematic perspective view of a glove compartment provided with a closing door according to the present invention;
- Figure 2 is a perspective view of the door of Figure 1 in a first operating configuration;
- Figure 3 is a perspective view of the door of Figure 1 in a second operating configuration;
- Figure 4 is a schematic section of a second embodiment of the present invention along a plane perpendicular to a hinge axis of the closing door;
- Figure 5 is a perspective view of the compartment of Figure 4; and
- Figures 6 and 7 are sections along a plane perpendicular to the hinge axis of the door, of a third embodiment in respective alternative use configurations.

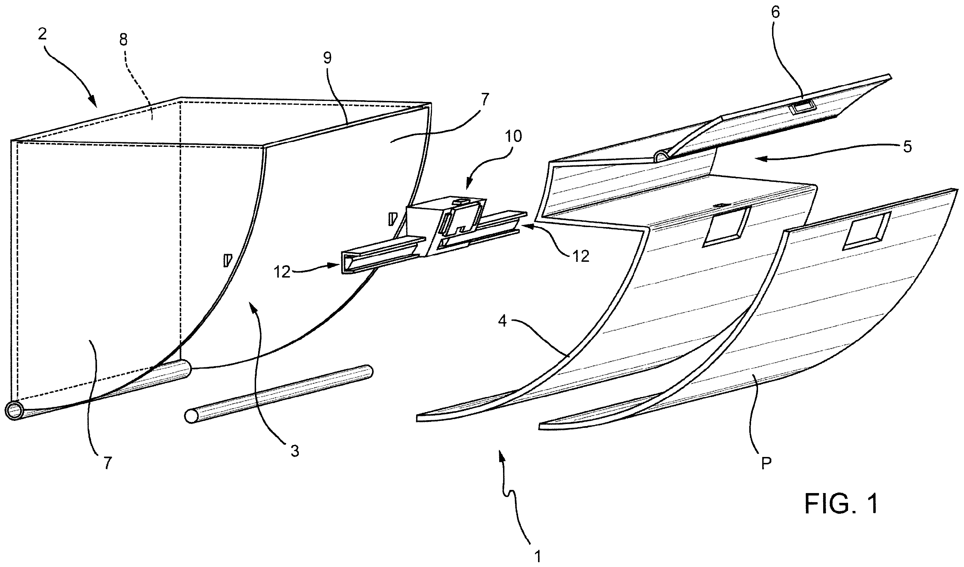

In Figure 1, the reference number 1 indicates a glove compartment comprising a structure 2 defining a space 3 for housing items, a shaped door 4 to close the space 3 and defining at least in part a recess 5, and a closure 6 for the recess 5.

According to a preferred embodiment the structure 2 is formed in a single body or is pre-assembled and subsequently mounted in a specially designed compartment in the dashboard. It is, however, possible that the structure 2 is defined by portions of additional components of the dashboard so as to define the space 3.

Furthermore, the shaped door 4 can be hinged directly to the structure 2 so as to define a unit suitable for being pre-assembled independently from the dashboard, or for being hinged to the dashboard so as to close the space 3 in any case.

Preferably, the structure 2 comprises a pair of opposite lateral walls 7 and a bottom wall 8 to connect the opposite lateral walls 7 one to the other. In the closed position, the shaped door 4 faces the bottom wall 8. On the same side of shaped door 4, the opposite lateral walls 7 are connected by a cross member 9, preferably arranged above the shaped door 4. According to the example of embodiment of Figure 1, the shaped door 4 is hinged to the conjunction between the bottom wall 8 and the opposite lateral walls 7. It is, however, possible that the shaped door 4 is fixed either to the bottom wall 8 or to the opposite lateral walls 7.

As illustrated in Figure 1, the shaped door 4 comprises a multi-point latch independently operated lock 10 provided with a first manual actuation device to keep the shaped door 4 in a closed position and a second manual actuation device different from the first actuation device to keep the closure 6 in a closed position. Preferably, the first and the second actuation devices are rotary handles or buttons and actuate, respectively, a pair of latches 12 movable from and the opposite lateral walls 7 and a latch 13 movable towards and from the recess 5. The latches 12 selectively engage in opposite lateral walls 7 to hold the shaped door 4 in the closed position. The latch 13 is retractable inside the recess 5 and, in the extracted position, engages the closure 6. The multi-point latch independently operated lock 10, with the respective buttons or handles and the latches 12, 13 is an assembly that can be pre-assembled before being mounted on the shaped door 4. Furthermore, preferably, the buttons or handles define a grip for the hands to guide the movement of the shaped door. In this regard, the handles protrude and the buttons are arranged in respective niches and, when pressed, allow the fingers to have enough grip to guide the opening of the shaped door 4.

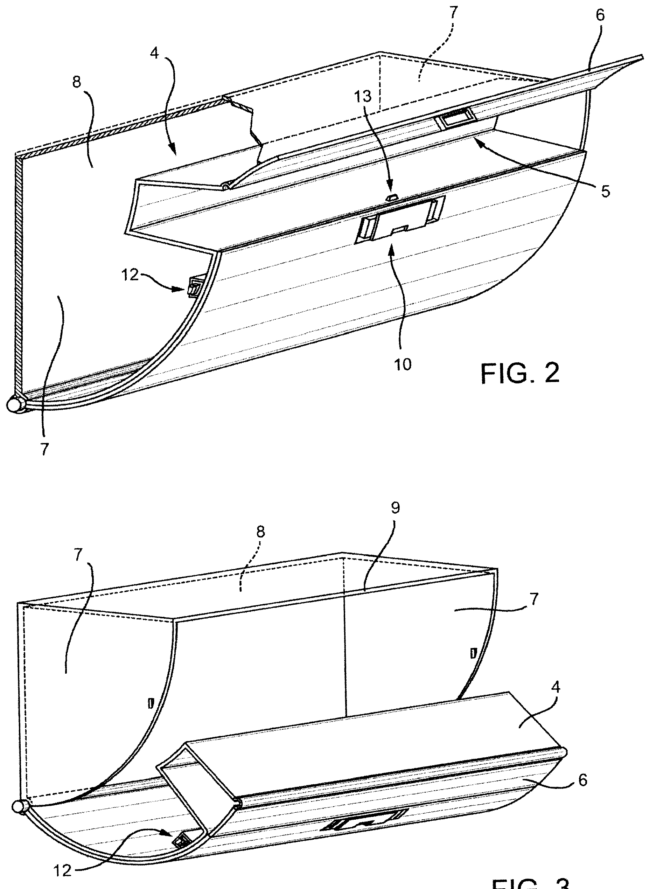

As illustrated in Figure 3, both the latches 12, 13 and the shaped door 4 and the cover 6 are operatively independent of one another: it is in fact possible to open one while the other is closed and vice versa. In this way, the recess 5 is accessible by the user even when the shaped door 4 closes the space 3.

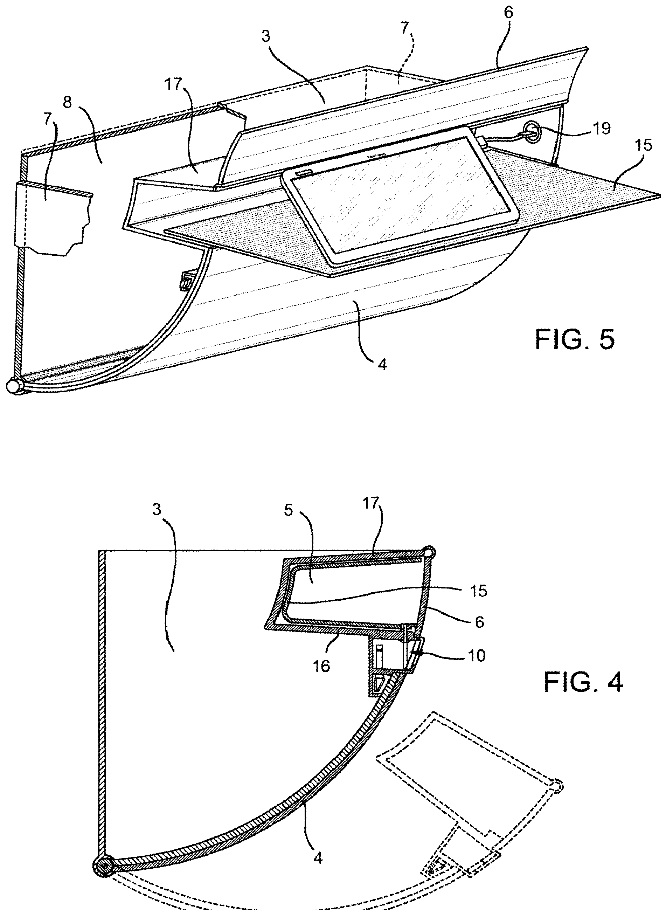

According to the example of Figures 1-3, the recess 5 is only partially defined by the shaped door 4. In fact, the opposite lateral walls 7 laterally close the recess 5 when the shaped door 4 is closed. The recess 5 is therefore laterally open when the shaped door 4 is open (Figure 4). In this way, the shaping, for example the molding by injection of the door 4 is simplified and the production costs are reduced.

According to an embodiment not illustrated, the shaped door comprises a drawer sliding parallel to a plane perpendicular to the hinge axis. In this case, the compartment defines both the recess 5 and the closure 6. In addition, the drawer cooperates with the multi-point latch lock 10 so as to be held in the closed position when the shaped door 4 is opened. The drawer can be covered or uncovered by a wall of the shaped door 4 when in the closed position. In addition, preferably, the drawer opens and closes along guides carried by the door 4 and parallel to a plane perpendicular to the hinge axis of the door 4.

According to the embodiments of the figures, the recess 5 extends parallel to the hinge axis of the shaped door 4 but it is also possible that the recess is elongated in a transverse direction, preferably perpendicular, to said hinge axis. In both cases, the closure 6 is hinged.

According to the embodiment of Figures 4 and 5, the recess 5 houses a pull-out platform 15 movable between a hideaway retracted position and an extracted position. In the extracted position, the closure 6 may be opened, preferably kept open, and the pull-out platform 15 protrudes below the recess 5 (Figure 5). According to the embodiment of the figures, the pull-out platform 15 is of a rolling shutter type and comprises a plurality of meshes so as to be wound, in the retracted position, around a roller (not illustrated) or so as to be housed inside the recess following a path defined by guides. Said path has at least one deviation and is preferably 'U'-shaped. In this latter case, advantageously, each 'U'-shaped guide has a pair of sides respectively facing a bottom wall 16 and a top wall 17 of the shaped door 4 (Figure 4), the walls 16, 17 defining the recess 5.

According to the embodiment of Figure 5, also applicable to other embodiments of the recess 5, the shaped door 4 defines, in the recess 5, lateral openings which are closed, when the door 4 is held in position by the multi-point latch lock 10, by the opposite lateral walls 7. One of said lateral walls 7 is advantageously provided with a power outlet 19, for example a power outlet according to a USB format, or another outlet such as that for the connecting plug of headphones, earphones etc. to a transmission system of the vehicle signals, such as audio signals. In this way, it is possible that an electronic or electrical device is charged and/or connected while being placed in the recess 5.

The closure 6 can be kept in the open position 5 (Figure 5) by means of several devices, for example by means of controlled friction hinges, pneumatic system hinges, spring damping system or the like.

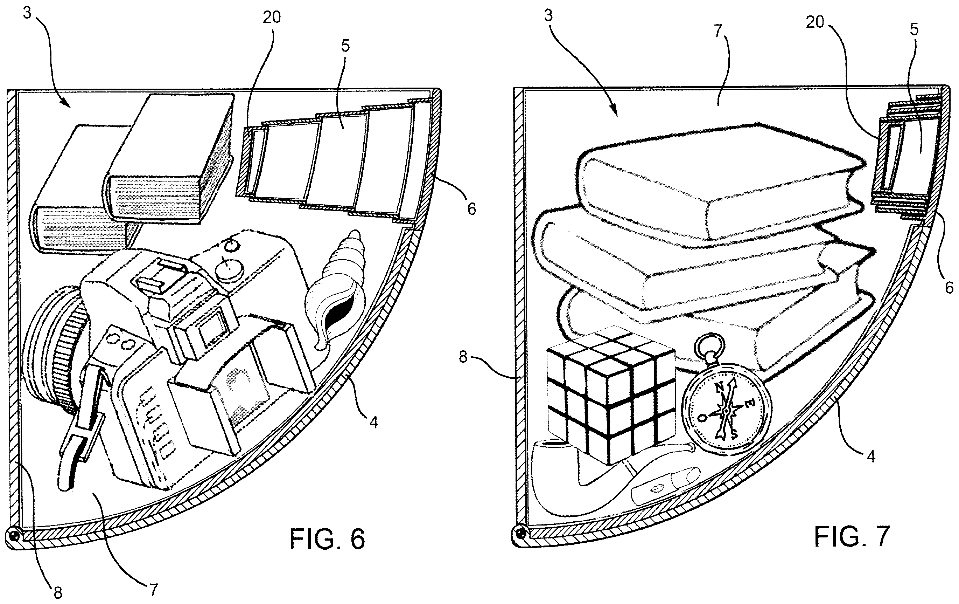

Figures 6 and 7 illustrate further embodiments of a shaped door 4 for a glove compartment according to the present invention. According to said embodiment, the space 5 has a variable size and the shaped door 4 comprises collapsible walls 20 to define the recess 5. Preferably, the collapsible walls are telescopic. In particular, Figure 6 illustrates a configuration in which the collapsible walls 20 define a maximum volume of the recess 5 and Figure 7 illustrates a configuration in which the collapsible walls 20 define a minimum volume and different from zero of the recess 5.

As illustrated in the figures, the shaped door 4 has a shape suited to avoid interference during the opening / closing of the space 3. In this regard, when the recess 5 is arranged in an end position such as to be proximal to the cross member 9, the bottom and top walls of the door 4 defining the recess 5 are suitably convergent and/or rounded towards the inside of the space 3.

The solution proposed is relatively simple to implement and increases the comfort of the front area of the passenger compartment, both for the driver and for the passenger. In fact, both can store items and find them easily. In particular, the embodiment in Figures 1-3 in which the recess 5, inside the space 3, is exclusively defined by fixed walls with the remaining portion of the door 4, is particularly inexpensive to implement, as well as the embodiment not illustrated in which the door 4 comprises a drawer.

The guides for the platform 15 and/or the collapsible walls 20 increase the flexibility of use of the glove compartment.

Finally, from the above it is evident that the described and illustrated embodiments of the glove compartment may be subject to modifications and alternatives which do not depart from the scope of the present invention, as defined in the appended claims.

It is possible that the multi-point latch lock 10, in a non-illustrated embodiment, is arranged above the recess 5 and has a latch engaging selectively in the cross member 9 for closing the shaped door 4 and a latch cooperating with the closure 6. The recess 5 is arranged in the upper half of the shaped door 4, that is, towards the cross member 9, and shaped door 4 is hinged in its lower half. In this way, when the shaped door is open, the items collected in the space 3 are deposited by gravity in a fully visible area.

A panel P can be applied to the shaped wall 4 to define, in part or in total, the surface visible from the passenger compartment when the door itself is closed.

## Claims

1. A glove compartment (1) for a dashboard of a motor vehicle comprising a structure (2) defining a space (3) to house items and a movable door (4) to open or close the space (3); the door (4) defining a recess (5) configured to house items and be accessible by a user even while the door (4) is closed.

2. The compartment according to claim 1, **characterized by** comprising a closure (6) movable between an open position in which the recess (5) is accessible while the door (4) is closed and a closed position in which the recess (5) holds the items in the inside thereof when the door (4) is moved to open the space (3).

3. The compartment according to claim 2, **characterized in that** the closure (6) is carried by the door (4).

4. The compartment according to any one of the preceding claims, **characterized in that** the door (4) comprises a pull-out platform (15).

5. The compartment according to claim 4, **characterized in that** the platform (15) is link-like flexible.

6. The compartment according to one of the claims 4 or 5, **characterized in that** in the retracted position, the platform (15) is housed in the recess (5).

7. The compartment according to any one of the preceding claims, **characterized in that** the door (4) comprises collapsible walls (20) to define the recess (5).

8. The compartment according to claim 7, **characterized in that** the collapsible walls (20) are telescopic.

9. The compartment according to any one of the preceding claims, **characterized in that** the recess (5) is laterally open to face, when the door (4) closes the space (3), the fixed lateral walls (7) that delimit the space (3), in which at least one electrical or signal transmission power outlet (19) is carried by one of the lateral walls (7) and in which the power outlet (19) is accessible from the recess (5) when the door (4) closes the space (3).

10. The compartment according to claim 1, **characterized in that** the door (4) comprises a pull-out drawer and **in that** the recess (5) is defined by the drawer.
